# EUROPÄISCHE PATENTSCHRIFT

(11) **EP 1 837 370 B1**
(45) Veröffentlichungstag und Bekanntmachung des Hinweises auf die Patenterteilung: **27.05.2009**
(21) Anmeldenummer: 06111680.2
(22) Anmeldetag: 24.03.2006
(51) Int. Cl.: C08L 9/06, C08L 9/00, C08K 3/04, B60C 1/00, C08K 3/34

(54) **Kautschukmischung und Reifen**
Rubber composition and tyres
Composition de caoutchouc et pneumatiques

(43) Veröffentlichungstag der Anmeldung: 26.09.2007
(73) Patentinhaber: Continental Aktiengesellschaft, 30165 Hannover (DE)
(72) Erfinder: Strübel, Christian, Dr., 30559, Hannover (DE); Söhnen, Dietmar, Dr., 31867, Lauenau (DE)

(56) Entgegenhaltungen:
- EP-A- 1 072 442
- EP-A- 1 270 657
- EP-A- 1 529 806

## Beschreibung

Die Erfindung betrifft eine schwefelvernetzbare Kautschukmischung ohne aromatische Prozessöle, insbesondere für den Laufstreifen von Fahrzeugluftreifen, enthaltend zumindest ein lösungspolymerisiertes Styrol-Butadien-Copolymer, zumindest einen Dienkautschuk, Ruß, Mineralölweichmacher, Kieselsäure und zumindest ein Silan-Kupplungsagens. Die Erfindung betrifft ferner einen Fahrzeugluftreifen mit einem Laufstreifen, der zumindest zum Teil aus einer solchen, mit Schwefel vulkanisierten Kautschukmischung besteht.

Da die Fahreigenschaften eines Reifens, insbesondere Fahrzeugluftreifens, in einem großen Umfang von der Kautschukzusammensetzung des Laufstreifens abhängig sind, werden besonders hohe Anforderungen an die Zusammensetzung der Laufstreifenmischung gestellt. So wurden vielfältige Versuche unternommen, die Eigenschaften des Reifens durch die Variation der Polymerkomponenten, der Füllstoffe und der sonstigen Zuschlagstoffe in der Laufstreifenmischung positiv zu beeinflussen. Dabei muss man berücksichtigen, dass eine Verbesserung in der einen Reifeneigenschaft oft eine Verschlechterung einer anderen Eigenschaft mit sich bringt. An Laufstreifenmischungen für PKW- und Van-Reifen werden beispielsweise höchste Anforderungen hinsichtlich des ABS-Nass- und Trockenbremsens, des Abriebwiderstands, des Rollwiderstands, der Haltbarkeit und des Handlings, insbesondere auf trockener Fahrbahn, gestellt. Als Maß für das Handlingverhalten auf trockener Fahrbahn dient die dynamische Steifigkeit, wobei eine Erhöhung der dynamischen Steifigkeit bzw. des dynamischen Moduls E' mit einer Verbesserung des Handlingverhaltens korreliert werden kann.

Um Reifeneigenschaften wie Abrieb, Nassrutschverhalten und Rollwiderstand zu beeinflussen, ist es z. B. bekannt, verschiedene Styrol-Butadien-Copolymere mit unterschiedlichen Styrol- und Vinyl-Gehalten und mit unterschiedlichen Modifizierungen für die Kautschukmischungen zu verwenden.

Aus der EP 1 270 657 A1 ist es bekannt, die Eigenschaften eines Reifens hinsichtlich Nassgriff, Wintereigenschaften, Abrieb und Rollwiderstand zu verbessern, in dem man für die Kautschukmischung, die den Reifenlaufstreifen bildet, 30 - 90 phr eines lösungspolymerisierten Styrol-Butadien-Copolymers (S-SBR) verwendet, das einen Styrolgehalt von 5 bis 35 Gew.-% und einen Vinyl-Anteil von 10 - 85 Gew.-% aufweist. Das S-SBR ist gekoppelt, beispielsweise mit Zinn, und ist mit einer Aminogruppe chemisch modifiziert. Die Kautschukmischung enthält außerdem 10 - 70 phr zumindest eines weiteren Dienkautschuks, 20 bis 100 phr Kieselsäure, 1-15 phr Silan-Kupplungsagens und 5-60 phr eines speziellen Weichmachers. Das Handlingpotenzial der in der EP 1 270 657 A1 genannten Reifenmischungen entspricht nicht in jedem Fall den gewünschten hohen Anforderungen.

Die EP 1 457 501 A1 offenbart Styrol-Butadien-Copolymere mit einem hohen Vinyl-Anteil, die mit primären Aminogruppen und Alkoxysilylgruppen modifiziert sind, Verfahren zur Herstellung dieser Styrol-Butadien-Copolymere, Kautschukmischungen mit diesen Styrol-Butadien-Copolymeren sowie Reifen, deren Laufstreifen aus dieser Kautschukmischng bestehen. Die Reifen sollen sich durch eine gute Balance zwischen Abriebwiderstand, Haltbarkeit, Hystereseverlust und Nassgriffverhalten auszeichnen.

Ausgehend von diesem Stand der Technik liegt der Erfindung die Aufgabe zugrunde, Kautschukmischungen für die Laufstreifen von Fahrzeugluftreifen bereitzustellen, deren Vulkanisate sich durch eine erhöhte dynamische Steifigkeit auszeichnen und damit die kundenrelevante Eigenschaft "Handling auf trockener Straße" verbessern. Gleichzeitig sollen das Abriebverhalten, das ABS-Nassbremsen und der Rollwiderstand zumindest auf gleichem Niveau verbleiben.

Gelöst wird diese Aufgabe erfindungsgemäß dadurch, dass die Kautschukmischung frei von aromatischen Prozessölen ist und
- 30 - 90 phr (Gewichtsteile, bezogen auf 100 Gewichtsteile der gesamten Kautschuke in der Mischung) zumindest eines lösungspolymerisierten Styrol-Butadien-Copolymers mit einem Vinyl-Anteil von mehr als 35 Gew.-%, das mit primären Aminogruppen und mit Alkoxysilylgruppen modifiziert ist,
- 10 - 70 phr zumindest eines weiteren Dienkautschuks,
- 5 - 35 phr zumindest eines Rußes mit einer Iodadsorptionszahl von 100 - 180 g/kg und einer DBP-Zahl von 100 -150 cm³/100 g,
- 1 - 80 phr zumindest eines Mineralölweichmachers, der einen Gehalt an polycyclischen aromatischen Verbindungen, bestimmt mit dem DMSO-Extrakt nach der IP 346 Methode, von weniger als 3 Gew.-%, bezogen auf das Gesamtgewicht des Mineralölweichmachers, aufweist,
- 20 - 100 phr zumindest einer Kieselsäure und
- 1 - 15 phr zumindest eines Silan-Kupplungsagenzes.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Unter aromatischen Prozessölen versteht man Mineralölweichmacher, die gemäß ASTM D 2140 über 25 %, vorzugsweise über 35 %, aromatische Bestandteile (C_{A}), weniger als 45 % naphthenische (C_{N}) und weniger als 45 % paraffinische (C_{P}) Bestandteile enthalten. Die Viskositäts-Dichte-Konstante gemäß ASTM D 2140 (VDK) von aromatischen Prozessölen ist größer als 0,9. Ferner werden die aromatischen Prozessöle nach ASTM D 2226 klassifiziert in Öltyp 101 und 102.

Die polycyclischen aromatischen Verbindungen umfassen aromatische Kohlenwasserstoffe, die mehr als drei kondensierte aromatische Ringe enthalten, und die davon abgeleiteten heterocyclischen Verbindungen mit Schwefel- und/oder Stickstoff. Die Ringe können mit kurzen Alkyl- oder Cycloalkylgruppen substituiert sein.

Überraschenderweise wurde gefunden, dass durch die Kombination von 30 bis 90 phr des speziell modifizierten lösungspolymerisierten Styrol-Butadien-Copolymers mit 5 bis 35 phr eines so genannten Aktivrußes, aufweisend eine hohe Struktur (hohe DBP-Zahl) und eine große Oberfläche (hohe Jodadsorptionszahl), und mit 1 - 80 phr zumindest eines Mineralölweichmachers, aufweisend einen geringen Gehalt an polycyclischen Verbindungen, in kieselsäurehaltigen Mischungen eine signifikante Erhöhung des dynamischen Moduls E' der Vulkanisate erbringt. Gleichzeitig bleiben der Abrieb, das Nassbremsverhalten und der Rollwiderstand zumindest auf gleichem Niveau oder werden im Vergleich zu Mischungen aus dem Stand der Technik sogar verbessert.

Die schwefelvernetzbare Kautschukmischung enthält 30 - 90 phr zumindest eines lösungspolymerisierten Styrol-Butadien-Copolymers mit einem Vinyl-Anteil von mehr als 35 Gew.-%, vorzugsweise 35 - 80 Gew.-%, das mit primären Aminogruppen und mit Alkoxysilylgruppen modifiziert ist. Der Styrol-Anteil in dem Copolymer beträgt bevorzugt 10 - 35 Gew.-%. Derartige lösungspolymerisierte Styrol-Butadien-Copolymere und Verfahren zu deren Herstellung werden beispielsweise in der EP 1 457 501 A1 offenbart und können von der Firma JSR Corporation bezogen werden. Um besonders positive Effekte im Hinblick auf die Reifeneigenschaften zu erzielen, ist es von Vorteil, wenn der Anteil an primären Aminogruppen 0,5 - 200 mmol/kg des Copolymers und der Anteil an Alkoxysilylgruppen ebenfalls 0,5 - 200 mmol/kg des Copolymers beträgt. Beispielsweise können die lösungspolymerisierten Styrol-Butadien-Copolymer HPR 355 (T_{g}: -27 °C, 28 Gew.-% Styrol, 56 Gew.-% Vinyl) und HPR 350 (T_{g}: -35 °C, 21 Gew.-% Styrol, 55 Gew.-% Vinyl) der Firma JSR Corporation eingesetzt werden.

Die erfindungsgemäße Kautschukmischung enthält weiterhin 10 - 70 phr zumindest eines weiteren Dienkautschuks. Zu den Dienkautschuken zählen alle Kautschuke mit einer ungesättigten Kohlenstoffkette, die sich zumindest teilweise von konjugierten Dienen ableiten. Besonders bevorzugt ist, wenn der Dienkautschuk oder die Dienkautschuke ausgewählt ist bzw. sind aus der Gruppe, bestehend aus Naturkautschuk (NR), synthetischem Polyisopren (IR), Polybutadien (BR) und anderen Styrol-Butadien-Copolymeren (SBR). Diese Dienelastomere lassen sich gut zu der Kautschukmischung verarbeiten und ergeben in den vulkanisierten Reifen gute Reifeneigenschaften.

Die Kautschukmischung kann als Dienkautschuk Polyisopren (IR, NR) enthalten. Dabei kann es sich sowohl um cis-1,4-Polyisopren als auch um 3,4-Polyisopren handeln. Bevorzugt ist allerdings die Verwendung von cis-1,4-Polyisoprenen mit einem cis-1,4-Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren; der cis-1,4-Anteil im Naturkautschuk ist größer 99 Gew.-%.

Enthält die Kautschukmischung als Dienkautschuk Polybutadien (BR), kann es sich dabei sowohl um cis-1,4- als auch um Vinyl-Polybutadien (40-90 Gew.-% Vinyl-Anteil) handeln. Bevorzugt ist die Verwendung von cis-1,4-Polybutadien mit einem cis-1,4-Anteil größer 90 Gew.-%, welches z. B. durch Lösungspolymerisation in Anwesenheit von Katalysatoren vom Typ der seltenen Erden hergestellt werden kann.

Bei den Styrol-Butadien-Copolymeren handelt es sich um solche, die nicht unter die speziell modifizierten lösungspolymerisierten Typen gemäß Anspruch 1 fallen. Es kann sich z. B. um nicht oder anders modifizierte lösungspolymerisierte Styrol-Butadien-Copolymere oder um Copolymere mit anderen Vinyl-Anteilen (< 35 Gew.-%)handeln. Die S-SBR können auch gekoppelt, z. B. mit Zinn, sein. Es können aber auch emulsionspolymerisiertes Styrol-Butadien-Copolymer (E-SBR) sowie Mischungen aus E-SBR und S-SBR eingesetzt werden. Der Styrolgehalt des E-SBR beträgt ca. 15 bis 50 Gew.-% und es können die aus dem Stand der Technik bekannten Typen, die durch Copolymerisation von Styrol und 1,3-Butadien in wässriger Emulsion erhalten wurden, verwendet werden.

Zusätzlich zu den genannten Dienkautschuken kann die Mischung aber auch noch andere Kautschuktypen, wie z. B. Styrol-Isopren-Butadien-Terpolymer, Butylkautschuk, Halobutylkautschuk oder Ethylen-Propylen-Dien-Kautschuk (EPDM), enthalten.

Die erfindungsgemäße Kautschukmischung enthält 5 - 35 phr des oder der Aktivruße(s). Der Aktivruß weist eine Iodadsorptionszahl (gemäß ASTM D 1510) von 100 -180 g/kg, vorzugsweise von 110 - 130 g/kg, und einer DBP-Zahl (gemäß ASTM D 2414) von 100 - 150 cm³/100 g, vorzugsweise von 120 - 140 cm³/100 g auf. Es können beispielsweise Ruße der Typen N-242 und N-121 oder HV3396 verwendet werden.

In der erfindungsmäßen Mischung werden 1 - 80 phr, vorzugsweise 5 - 30 phr, eines Mineralölweichmachers oder Kombinationen aus mehreren Mineralölweichmachern eingesetzt. Diese Menge an Weichmacher gewährleistet eine optimale Verarbeitbarkeit bei guten dynamischen Eigenschaften und guter Kälteflexibilität. Als Mineralölweichmacher, deren Gehalte an polycyclischen aromatischen Verbindungen (PCA-Gehalt), bestimmt mit dem DMSO-Extrakt nach der IP 346 Methode, weniger als 3 Gew.-%, bezogen auf das Gesamtgewicht des Mineralölweichmachers, betragen, können grundsätzlich alle dem Fachmann bekannten Mineralölweichmacher benutzt werden, die diese Werte erfüllen. Derartige Mineralölweichmacher sind z. B. MES (mild extraction solvate), das durch Solvent-Extraktion von Schweröldestillaten oder durch Behandlung von Schweröldestillaten mit Wasserstoff in Anwesenheit eines Katalysators (Hydrierung) erhalten wird, TDAE (treated destillate aromatic extract) oder naphthenische Weichmacher. Hinsichtlich dieser Mineralölweichmacher sei in diesem Zusammenhang exemplarisch auf V. Null, "Safe Process Oils for Tires with Low Environmental Impact", Kautschuk Gummi Kunststoffe, 12/1999, S. 799-805 verwiesen. Die Verwendung derartiger Mineralölweichmacher in Kautschukmischungen ist z. B. auch aus der EP 0 940 462 A2 bekannt.
Wird ein Mineralölweichmacher mit einer Glasübergangstemperatur von weniger als - 45 °C verwendet, kann man die Kälteflexibilität bei tieferen Temperaturen weiter verbessern.

Die Kautschukmischung enthält 20 - 100 phr, bevorzugt 50 - 90 phr zumindest einer Kieselsäure. Es können alle dem Fachmann für die Reifenindustrie bekannten Kieselsäuren eingesetzt werden.

Als weitere Füllstoffe kann die Kautschukmischung neben dem Aktivruß und der Kieselsäure auch noch andere Ruße, Aluminiumhydroxid, Schichtsilikate, Kreide, Stärke, Magnesiumoxid, Titandioxid, Kautschukgele, Kurzfasern usw. in beliebigen Kombinationen enthalten.

Zur Verbesserung der Verarbeitbarkeit und zur Anbindung der Kieselsäure und anderer ggf. vorhandener polarer Füllstoffe an den Dienkautschuk wird zumindest ein Silan-Kupplungsagens in Mengen von 1-15 phr in der Kautschukmischung eingesetzt. Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, -NH₂ oder -Sₓ- (mit x = 2-8). So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S der Firma Degussa) zugesetzt werden.

Neben den bereits genannten Inhaltsstoffen kann die Kautschukmischung weitere in der Kautschukindustrie übliche Zusatzstoffe wie z. B. weitere Weichmacher, Alterungsschutzmittel, Aktivatoren, wie z. B. Zinkoxid und Fettsäuren (z. B. Stearinsäure), Wachse und Mastikationshilfsmittel in üblichen Gewichtsteilen enthalten.

Die Vulkanisation wird in Anwesenheit von Schwefel oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen (0,4 bis 4 phr, Schwefel bevorzugt in Mengen von 1,5 bis 2,5 phr) der Kautschukmischung zugesetzt.

Des Weiteren kann die Kautschukmischung vulkanisationsbeeinflussende Substanzen wie Vulkanisationsbeschleuniger, Vulkanisationsverzögerer und Vulkanisationsaktivatoren in üblichen Mengen enthalten, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenamidbeschleuniger wie z. B. Benzothiazyl-2-cyclohexylsulfenamid (CBS), Guanidinbeschleuniger wie z. B. N,N'-Diphenylguanidin (DPG), Dithiocarbamatbeschleuniger wie z. B. Zinkdibenzyldithiocarbamat, Disulfide. Die Beschleuniger können auch in Kombination miteinander eingesetzt werden, wobei sich synergistische Effekte ergeben können.

Die Herstellung der erfindungsgemäßen Kautschukmischung erfolgt auf herkömmliche Art und Weise, wobei zunächst in der Regel eine Grundmischung, die sämtliche Bestandteile mit Ausnahme des Vulkanisationssystems (Schwefel und vulkanisationsbeeinflussende Stoffe) enthält, in ein oder mehreren Mischstufen hergestellt wird und im Anschluss durch Zugabe des Vulkanisationssystems die Fertigmischung erzeugt wird. Anschließend wird die Mischung weiterverarbeitet, z. B. durch einen Extrusionsvorgang, und in die entsprechende Form gebracht. Bevorzugt wird die Mischung in die Form eines Laufstreifens gebracht. Ein so erzeugter Laufstreifenmischungsrohling wird bei der Herstellung des Fahrzeugluftreifenrohlings wie bekannt aufgelegt. Der Laufstreifen kann aber auch auf einen Reifenrohling, der bereits alle Reifenteile bis auf den Laufstreifen enthält, in Form eines schmalen Kautschukmischungsstreifens aufgewickelt werden. Es ist bei den Reifen unerheblich, ob der gesamte Laufstreifen aus einer einzigen Mischung hergestellt worden ist oder z. B. einen Cap- und Base-Aufbau aufweist, denn wichtig ist, dass zumindest die mit der Fahrbahn in Berührung kommende Fläche aus der erfindungsgemäßen Kautschukmischung hergestellt worden ist.

Die Erfindung soll nun anhand von Vergleichs- und Ausführungsbeispielen, die in der Tabelle 1 zusammengefasst sind, näher erläutert werden.

Bei sämtlichen in der Tabelle 1 enthaltenen Mischungsbeispielen sind die angegebenen Mengenangaben Gewichtsteile, die auf 100 Gewichtsteile Gesamtkautschuk bezogen sind (phr). Die Vergleichsmischungen sind mit V gekennzeichnet, die erfindungsgemäßen Mischungen sind mit E gekennzeichnet. Die Mischungen wurden härtegleich eingestellt.

Mit den Mischungen gemäß Tabelle 1 wurden Reifen hergestellt, deren Laufstreifen aus den angegebenen Mischungen bestehen. Mit diesen Reifen wurde vergleichende Versuche bezüglich des Rollwiderstandes, des Abriebs und des ABS-Nassbremsens durchgeführt. Die entsprechenden Eigenschaften von Reifen mit einem Laufstreifen aus einer herkömmlichen Mischung gemäß V(1) wurde gleich 100 gesetzt, Werte größer als 100 bedeuten eine Verbesserung der entsprechenden Eigenschaft (Wertung, rating).
Ferner wurde der dynamische Modul E' (dynamische Steifigkeit) in Abhängigkeit von der Dehnung (0,1- 12 %) bei konstanter Temperatur für die Mischungen im Labor ermittelt. Dazu erfolgte die Mischungsherstellung unter üblichen Bedingungen in zwei Stufen in einem Labortangentialmischer. Aus den Mischungen wurden Prüfkörper durch optimale Vulkanisation unter Druck bei 160 °C hergestellt und mit diesen Prüfkörpern der dynamische Modul E', der auf das Handlingverhalten auf trockener Fahrbahn schließen lässt, ermittelt. Auch hier wurde die Mischung gemäß V(1) gleich 100 gesetzt.

**Tabelle 1**

| Bestandteile | Einheit | 1(V) | 2(V) | 3(V) | 4(V) | 5(E) |
|---|---|---|---|---|---|---|
| Naturkautschuk | phr | 30 | 30 | 30 | 30 | 30 |
| S-SBR Typ A^{a} | phr | 70 | 70 | 70 | - | - |
| S-SBR Typ B^{b} | phr | - | - | - | 70 | 70 |
| Ruß N-339 | phr | 10 | 10 | - | 10 | - |
| Ruß N-121 | phr | - | - | 10 | - | 10 |
| Kieselsäure^{c} | phr | 85 | 85 | 85 | 85 | 85 |
| aromatisches Prozessöl | phr | 20 | - | 20 | 20 | - |
| TDAE^{d} | phr | - | 20 | - | - | 20 |
| Silan-Kupplungsagens^{e} | phr | 8 | 8 | 8 | 8 | 8 |
| Alterungsschutzmittel | phr | 4 | 4 | 4 | 4 | 4 |
| Zinkoxid | phr | 2 | 2 | 2 | 2 | 2 |
| Stearinsäure | phr | 1 | 1 | 1 | 1 | 1 |
| Beschleuniger | phr | 4 | 4 | 4 | 4 | 4 |
| Schwefel | phr | 1,7 | 1,7 | 1,7 | 1,7 | 1,7 |

| Reifeneigenschaft | | | | | | |
|---|---|---|---|---|---|---|
| ABS-Nassbremsen | | 100 | 98 | 100 | 102 | 104 |
| Abrieb | | 100 | 101 | 101 | 95 | 105 |
| Rollwiderstand | | 100 | 101 | 98 | 105 | 105 |
| Dynamischer Modul E' | | 100 | 95 | 102 | 92 | 120 |

| | | | | | | |
|---|---|---|---|---|---|---|
| ^{a}NS 116 R, Nippon Zeon, Japan, Vinyl-Anteil: 63 Gew.-%, Styrol-Anteil: 21 Gew.-%, zinngekoppelt und endgruppenmodifiziert mit Aminobenzophenon ^{b}HPR 355, JSR Corporation, Japan, Vinyl-Anteil: 56 Gew.-%, Styrol-Anteil: 28Gew.-%. ^{c}VN3, Degussa AG, Deutschland, Stickstoff-Oberfläche: 175 m²/g, CTAB-Oberfläche: 160 m²/g ^{d} treated destillate aromatic extract ^{e} Silquest^{®} A 1589, General Electric Speciality, USA | | | | | | |

Aus den Daten der Tabelle wird ersichtlich, dass nur die Kombination von speziell modifiziertem S-SBR mit speziellem Ruß und mit Weichmachern mit geringem Gehalt an polycylischen aromatischen Verbindungen zu einer deutlichen und überraschenden Verbesserung der dynamischen Steifigkeit führt (s. 5(E)), die aus den Einzelmaßnahmen nicht zu erwarten war. Bei Reifen mit einer dementsprechenden Lauffläche resultiert dies in einem besseren Handlingverhalten auf trockener Fahrbahn. Gleichzeitig werden das Abriebverhalten, der Rollwiderstand und das ABS-Nassbremsen verbessert.

## Patentansprüche

1. Schwefelvernetzbare Kautschukmischung ohne aromatische Prozessöle, insbesondere für den Laufstreifen von Fahrzeugluftreifen, enthaltend
- 30 - 90 phr (Gewichtsteile, bezogen auf 100 Gewichtsteile der gesamten Kautschuke in der Mischung) zumindest eines lösungspolymerisierten Styrol-Butadien-Copolymers mit einem Vinyl-Anteil von mehr als 35 Gew.-%, das mit primären Aminogruppen und mit Alkoxysilylgruppen modifiziert ist,
- 10 - 70 phr zumindest eines weiteren Dienkautschuks,
- 5 - 35 phr zumindest eines Rußes mit einer Iodadsorptionszahl von 100 - 180 g/kg und einer DBP-Zahl von 100 - 150 cm³/100 g,
- 1 - 80 phr zumindest eines Mineralölweichmachers, der einen Gehalt an polycyclischen aromatischen Verbindungen, bestimmt mit dem DMSO-Extrakt nach der IP 346 Methode, von weniger als 3 Gew.-%, bezogen auf das Gesamtgewicht des Mineralölweichmachers, aufweist,
- 20 - 100 phr zumindest einer Kieselsäure und
- 1 - 15 phr zumindest eines Silan-Kupplungsagenzes.

2. Kautschukmischung nach Anspruch 1, **dadurch gekennzeichnet, dass** das lösungspolymerisierte Styrol-Butadien-Copolymer einen Vinyl-Anteil 35 - 80 Gew.-% und einen Styrol-Anteil von 10 - 35 Gew.-% aufweist.

3. Kautschukmischung nach Anspruch 1 oder 2, **dadurch gekennzeichnet, dass** der weitere Dienkautschuk ausgewählt ist aus der Gruppe, bestehend aus Naturkautschuk, synthetischem Polyisopren, Polybutadien und Styrol-Butadien-Copolymeren.

4. Kautschukmischung nach zumindest einem der vorhergehenden Ansprüche, **dadurch gekennzeichnet, dass** der Ruß eine Iodadsorptionszahl von 110 - 130 g/kg und einer DBP-Zahl von 120 - 140 cm³/100 g aufweist.

5. Kautschukmischung nach zumindest einem der vorhergehenden Ansprüche, **dadurch gekennzeichnet, dass** sie 5 - 30 phr des Mineralölweichmachers enthält.

6. Kautschukmischung nach zumindest einem der vorhergehenden Ansprüche, **dadurch gekennzeichnet, dass** der Mineralölweichmacher ausgewählt ist aus der Gruppe, bestehend aus naphthenischen Mineralölweichmachern, MES (mild extraction solvate) und TDAE (treated distillate aromatic extract).

7. Kautschukmischung nach zumindest einem der vorhergehenden Ansprüche, **dadurch gekennzeichnet, dass** sie 50 - 90 phr der Kieselsäure enthält.

8. Fahrzeugluftreifen mit einem Laufstreifen, der zumindest zum Teil aus einer mit Schwefel vulkanisierten Kautschukmischung nach einem der Ansprüche 1 bis 7 besteht.

## Claims

1. Sulfur-crosslinkable rubber mixture without aromatic process oils, in particular for the tread of vehicle tires, containing:
- 30 - 90 phr (parts by weight, based on 100 parts by weight of the total rubbers in the mixture) of at least one solution-polymerized styrene-butadiene copolymer having a vinyl fraction of more than 35 % by weight, which is modified with primary amino groups and with alkoxysilyl groups,
- 10 - 70 phr of at least one further diene rubber,
- 5 - 35 phr of at least one carbon black having an iodine adsorption number of 100 - 180 g/kg and a DBP number of 100 - 150 cm³/100g,
- 1 - 80 phr of at least one mineral oil plasticizer which has a content of polycyclic aromatic compounds, determined with the DMSO extract by the IP 346 method, of less than 3 % by weight, based on the total weight of the mineral oil plasticizer,
- 20 - 100 phr of at least one silica and
- 1 - 15 phr of at least one silane coupling agent.

2. Rubber mixture according to Claim 1, **characterized in that** the solution-polymerized styrene-butadiene copolymer has a vinyl fraction of 35 - 80% by weight and a styrene fraction of 10 - 35% by weight.

3. Rubber mixture according to Claim 1 or 2, **characterized in that** the further diene rubber is selected from the group consisting of natural rubber, synthetic polyisoprene, polybutadiene and styrene-butadiene copolymers.

4. Rubber mixture according to at least one of the preceding claims, **characterized in that** the carbon black has an iodine adsorption number of 110 - 130 g/kg and a DBP number of 120 - 140 cm³/100 g.

5. Rubber mixture according to at least one of the preceding claims, **characterized in that** it contains 5 - 30 phr of the mineral oil plasticizer.

6. Rubber mixture according to at least one of the preceding claims, **characterized in that** the mineral oil plasticizer is selected from the group consisting of naphthenic mineral oil plasticizers, MES (mild extraction solvate) and TDAE (treated distillate aromatic extract).

7. Rubber mixture according to at least one of the preceding claims, **characterized in that** it contains 50 - 90 phr of the silica.

8. Pneumatic vehicle tire having a tread which at least partly comprises a sulfur-vulcanized rubber mixture according to any of Claims 1 to 7.

## Revendications

1. Composition de caoutchouc réticulable au soufre, sans huiles aromatiques de processus, en particulier pour la bande de roulement de pneumatiques à air pour véhicules, contenant
- 30 - 90 phr (parties en poids par rapport à 100 parties en poids de l'ensemble des caoutchoucs dans la composition) d'au moins un copolymère styrène-butadiène polymérisé en solution, ayant une teneur en vinyle de plus de 35 % en poids, qui est modifié avec des groupes amino primaires et avec des groupes alcoxysilyle,
- 10 - 70 phr d'au moins un autre caoutchouc diène,
- 5 - 35 phr d'au moins un noir de carbone ayant un indice d'adsorption d'iode de 100 - 180 g/kg et un indice DBP (absorption de phtalate de dibutyle) de 100 - 150 cm³/100 g,
- 1 - 80 phr d'au moins un plastifiant de type huile minérale, qui présente une teneur en composés aromatiques polycycliques, déterminé avec l'extrait dans du DMSO selon la méthode IP 346, de moins de 3 % en poids, par rapport au poids total du plastifiant de type huile minérale,
- 20 - 100 phr d'au moins un acide silicique et
- 1 - 15 phr d'au moins un réactif de couplage silane.

2. Composition de caoutchouc selon la revendication 1, **caractérisée en ce que** le copolymère styrène-butadiène polymérisé en solution présente une teneur en vinyle de 35-80 % en poids et une teneur en styrène de 10 - 35 % en poids.

3. Composition de caoutchouc selon la revendication 1 ou 2, **caractérisée en ce que** l'autre caoutchouc diène est choisi dans le groupe consistant en le caoutchouc naturel, le polyisoprène synthétique, le polybutadiène et des copolymères styrène-butadiène.

4. Composition de caoutchouc selon au moins l'une des revendications précédentes, **caractérisée en ce que** le noir de carbone présente un indice d'adsorption d'iode de 110 - 130 g/kg et un indice DBP de 120 - 140 cm³/100 g.

5. Composition de caoutchouc selon au moins l'une des revendications précédentes, **caractérisée en ce qu'**elle contient 5 - 30 phr du plastifiant de type huile minérale.

6. Composition de caoutchouc selon au moins l'une des revendications précédentes, **caractérisée en ce que** le plastifiant de type huile minérale est choisi dans le groupe constitué par des plastifiants de type huile minérale naphténiques, le MES (mild extraction solvate) et le TDAE (treated distillate aromatic extract).

7. Composition de caoutchouc selon au moins l'une des revendications précédentes, **caractérisée en ce qu'**elle contient 50 - 90 phr de l'acide silicique.

8. Pneumatique à air pour véhicule comportant une bande de roulement dont au moins une partie consiste en une composition de caoutchouc vulcanisée au soufre selon l'une quelconque des revendications 1 à 7.
